# EUROPÄISCHE PATENTSCHRIFT

(11) **EP 3 252 947 B1**
(45) Veröffentlichungstag und Bekanntmachung des Hinweises auf die Patenterteilung: **26.12.2018**
(21) Anmeldenummer: 17171073.4
(22) Anmeldetag: 15.05.2017
(51) Int. Cl.: H02S 50/00, H02S 50/10

(54) **SCHALTUNGSANORDNUNGEN ZUR REDUZIERUNG DER POTENZIALINDUZIERTEN DEGRADATION BEI FOTOVOLTAIK-MODULEN**
CIRCUIT ARRANGEMENTS FOR REDUCING POTENTIAL-INDUCED DEGRADATION IN PHOTOVOLTAICS MODULES
SYSTÈMES DE COMMUTATION DESTINÉS À RÉDUIRE LA DÉGRADATION DE POTENTIEL INDUIT DANS DES PANNEAUX PHOTOVOLTAÏQUES

(30) Priorität: 03.06.2016 DE 102016209799
(43) Veröffentlichungstag der Anmeldung: 06.12.2017
(73) Patentinhaber: Bender GmbH & Co. KG, 35305 Grünberg (DE)
(72) Erfinder: HACKL, Dieter, 35463 Fernwald (DE); SCHÄFER, Oliver, 35305 Grünberg (DE); GEISS, Manfred, 35327 Ulrichstein (DE); SCHEPP, Karl, 35447 Reiskirchen (DE)
(74) Vertreter: advotec.

(56) Entgegenhaltungen:
- EP-A2- 2 466 320
- US-A- 5 712 572

## Beschreibung

Die Erfindung betrifft Schaltungsanordnungen zur Reduzierung der potenzialinduzierten Degradation bei Fotovoltaik-Modulen eines Fotovoltaik-Generators, mit einem Isolationsüberwachungsgerät zur zeitkontinuierlichen Isolationsüberwachung des Fotovoltaik-Generators. Weiterhin betrifft die Erfindung eine Fotovoltaik-Anlage mit einer Schaltungsanordnung zur Reduzierung der potenzialinduzierten Degradation bei Fotovoltaik-Modulen, mit einem Fotovoltaik-Generator und mit einem Isolationsüberwachungsgerät zur zeitlich kontinuierlichen Isolationsüberwachung des Fotovoltaik-Generators. Das Dokument US 5 712 572A beschreibt eine Schaltungsanordnung zur Isolationsüberwachung von Photovoltaik-Modulen.

Bei einer Fotovoltaik-Anlage ist zur Erreichung eines guten Wechselrichter-Wirkungsgrades eine hinreichend hohe Wechselrichter-Gleichspannung erforderlich. Daher wird eine Vielzahl von Fotovoltaik-Modulen eines Fotovoltaik-Generators seriell zu einem Strang verschaltet, wobei typischerweise Systemspannungen - elektrische Potenziale einzelner Solarzellen des Fotovoltaik-Generators gegen Erdpotenzial - auftreten, die bis zu einer Größenordnung von 400 V bis 1500 V reichen. Je nach Wechselrichterbauart stellen sich diese Potenziale frei ein, sodass bei symmetrischen Isolationswiderstandsverhältnissen zwischen einer Solarzelle des Fotovoltaik-Generators und einem geerdeten Modulrahmen von einem maximalen elektrischen Potenzial in Höhe der halben Systemspannung ausgegangen werden kann. Die Potenzialdifferenzen können Kriechströme zwischen der Solarzelle und Modulrahmen zur Folge haben, die bei Dünnschichtmodulen zu irreversiblen Schäden und bei Zelltypen auf der Basis von kristallinem Silizium zu einer teilweise reversiblen Zelldegradation führen können.

Diese als potenzialinduzierte Degradation (PID) bezeichnete Schädigung der Solarzelle führt zu erheblichen Leistungsverlusten des Fotovoltaik-Generators.

Als eine mögliche Ursache wird von der Fachwelt die Migration von herstellungsbedingt im äußeren Schichtenaufbau der Zelle vorhandenen Ladungsträgern angenommen, die unter dem Einfluss eines äußeren elektrischen Feldes - vermutlich positiv geladene Natrium-Ionen bei negativem Potenzial der Zelle gegen Erde - durch die Antireflexschicht getrieben werden und lokale Kurzschlüsse an der Zelloberfläche verursachen oder in die elektrisch leitende TCO-(Transparent Conductive Oxid)-Schicht gelangen und dort eine elektrochemische Korrosion verursachen.

Nach aktuellem Forschungsstand lassen sich die PID-bedingten Leistungsminderungen meist hemmen, indem das Auftreten negativer elektrischer Felder durch Erdung des Minuspols des Fotovoltaik-Generators vermieden wird. Dies kann beispielsweise durch den Einsatz eines Wechselrichters mit galvanischer Trennung geschehen, indem der Minuspol des Fotovoltaik-Generators idealerweise im Wechselrichter selbst geerdet wird. Durch die Funktionserdung des negativen Anschlusses des Fotovoltaik-Generators entsteht ein elektrisches Feld, in dem positiv geladene Ladungsträger in Richtung des negativen Pols und damit weg von der TCO-Schicht gezogen werden.

Allerdings wird in der Gebrauchsmusterschrift DE 20 2006 008 936 U1 festgestellt, dass auch eine dem Stand der Technik gemäße Funktionserdung des negativen Anschlusses des Fotovoltaik-Generators eine Modulschädigung nicht nachhaltig verhindern kann. Die Schrift schlägt daher eine Schaltung vor, durch die der negative Anschluss des Fotovoltaik-Generators auf ein positives Potenzial gegen Erde gehoben ist.

Eine andere Möglichkeit der Potenzialanhebung wird in der Patentschrift EP 2 086 020 B1 in Verbindung mit einer erhöhten Sicherheit gegen Blitzeinschlag offenbart. Dort ist eine Fotovoltaik-Anlage mit Potenzialanhebung beschrieben, die eine Spannungsquelle aufweist, deren Minuspol auf Erdpotenzial liegt und deren Pluspol mit dem Pluspol des Fotovoltaik-Generators verbunden ist.

Diese aus dem Stand der Technik bekannten Maßnahmen weisen jedoch signifikante sicherheitsrelevante Nachteile auf. So verhindert die Funktionserdung des negativen Anschlusses des Fotovoltaik-Generators über eine Sicherung eine zeitlich kontinuierliche Überwachung des Isolationswiderstandsniveaus mit einem Isolationsüberwachungsgerät (IMD - Insulation Monitoring Device). Insbesondere bei dem Auftreten symmetrischer Isolationsfehler ist damit ein Schutz vor Brandgefahren nicht gewährleistet.

Die Potenzialanhebung des Fotovoltaik-Generators mittels Spannungsquelle verbindet - je nach Lösungsansatz - den negativen oder den positiven Anschluss des Fotovoltaik-Generators über den typischerweise niederohmigen Innenwiderstand der Spannungsquelle mit Erde. Auch hier wird eine durchgängige Überwachung des Isolationswiderstandsniveaus mit einem Isolationsüberwachungsgerät verhindert. Auftretende symmetrische Fehler werden, je nach Wartungskonzept, nicht oder zu spät erkannt. Auch in diesem Fall entsteht eine erhöhte Brandgefahr.

Bislang konnten diese Probleme dadurch umgangen werden, dass pro Tag einmal vor Inbetriebnahme des Wechselrichters der Isolationswiderstandswert des Fotovoltaik-Generators in einer separaten Messung ermittelt wird. Hierzu werden sämtliche niederohmigen Verbindungen des Fotovoltaik-Generators mit Erde, also z.B. die Sicherung oder die Spannungsquelle, aufgetrennt und ein Isolationsüberwachungsgerät aktiviert.

Der Nachteil dieser Vorgehensweise ist, dass der Fotovoltaik-Generator nur in einem zeitlich sehr eingeschränkten Umfang überwacht wird. Es erfolgt keine zeitlich kontinuierliche Überwachung mit einer hinreichend breiten Abdeckung der vorkommenden Betriebszustände. Erfolgt die Freimessung z.B. immer bei Sonnenaufgang, um über den Tag einen möglichst hohen Stromertrag zu erhalten, so sind weder ein Betriebsmodus mit maximaler Generator-Spannung noch mit maximaler Generator-Leistung oder maximaler Betriebstemperatur zu erwarten. Es erfolgt auch keine Überwachung bei verschiedenen Betauungszuständen. Fehler, die nur in bestimmten Betriebszuständen entstehen, werden trotz Überwachung nicht vorausschauend entdeckt, sondern erst, wenn beispielsweise der Schaden in der elektrischen Isolierung des Fotovoltaik-Generators so groß wird, dass es bereits zum Ausfall oder schlimmstenfalls zum Brand kommt.

Der vorliegenden Erfindung liegt somit die Aufgabe zu Grunde, der potenzialinduzierten Degradation bei Fotovoltaik-Modulen eines Fotovoltaik-Generators entgegenzuwirken und gleichzeitig eine zeitliche kontinuierliche Isolationsüberwachung des Fotovoltaik-Generators zu ermöglichen.

Diese Aufgabe wird in einer ersten Lösung in Verbindung mit dem Oberbegriff des Anspruchs 1 dadurch gelöst, dass das Isolationsüberwachungsgerät symmetrisch zwischen einen Pluspol des Fotovoltaik-Generators und Erde und zwischen einen Minuspol des Fotovoltaik-Generators und Erde geschaltet ist und dass die Schaltungsanordnung eine Impuls-Einkopplungsschaltung aufweist, die zur Einkopplung positiver Spannungsimpulse symmetrisch zwischen den Pluspol des Fotovoltaik-Generators und Erde und zwischen den Minuspol des Fotovoltaik-Generators und Erde geschaltet ist.

Basierend auf der Erkenntnis, dass die Effekte der potenzialinduzierten Degradation durch eine Erhöhung einer negativen Spannungsamplitude gegen Erde beschleunigt werden, wird davon ausgegangen, dass eine Erhöhung der Spannungsamplitude mit entgegengesetzter Polarität den PID-Effekt verstärkt unterdrückt. Der Grundgedanke dieser ersten erfindungsgemäßen Lösung besteht somit darin, den Fotovoltaik-Generator mit kurzen positiven Spannungsimpulsen hoher Amplitude (größer 50 V) gegen Erde zu beaufschlagen, um eine Wanderung der Ladungsträger in den Zellen des Fotovoltaik-Moduls zu stoppen oder sogar umzukehren. Der Tastgrad und die Spannungsamplitude sind spezifisch an das Fotovoltaik-Modul anzupassen, um den Degradationseffekt für den verwendeten Zelltyp möglichst wirkungsvoll zu unterbinden. Studien zeigen, dass ein nicht-linearer Zusammenhang zwischen Spannungsamplitude und PID-Hemmung besteht. Um einen größtmöglichen Effekt der PID-Vermeidung zu erzielen, wird man daher eine maximal mögliche Impulsspannung wählen, wobei eine Obergrenze durch die Spannungsfestigkeit der PV-Module vorgegeben ist. Als Impulsdauer erscheinen Größenordnungen von einigen Sekunden praktikabel.

Das Isolationsüberwachungsgerät und die Impuls-Einkopplungsschaltung sind jeweils symmetrisch gegen Erde, d.h. sowohl an den Pluspol als auch an den Minuspol des Fotovoltaik-Generators geschaltet.

Vorteilhafterweise ist die Impuls-Einkopplungsschaltung als kapazitive Einkopplungsschaltung ausgeführt.

Die kapazitive Einkopplung der Spannungsimpulse ermöglicht eine zeitlich kontinuierliche Isolationsüberwachung, da kein ohmscher Widerstand die Messung des Isolationswiderstands negativ beeinflusst.

In weiterer vorteilhafter Ausgestaltung ist die Impuls-Einkopplungsschaltung in das Isolationsüberwachungsgerät integriert.

Die Zusammenfassung der Funktionalitäten der Isolationsüberwachung und der Impulseinkopplung in einem erweiterten Isolationsüberwachungsgerät führt zu schaltungstechnischen Vereinfachungen sowie zu einer effektiveren Durchführung von Prüf- und Überwachungsmaßnahmen.

Die Aufgabe wird in einer zweiten Lösung in Verbindung mit dem Oberbegriff des Anspruchs 4 dadurch gelöst, dass das Isolationsüberwachungsgerät unsymmetrisch zwischen einen Pluspol oder einen Minuspol des Fotovoltaik-Generators und Erde angekoppelt ist und dass eine niederohmige Spannungsquelle seriell zu der Ankopplung des Isolationsüberwachungsgerätes und seriell zu den Fotovoltaik-Modulen des Fotovoltaik-Generator geschaltet ist.

In dieser Lösung ist das Isolationsüberwachungsgerät unsymmetrisch, d.h. entweder an den Plus- oder an den Minusleiter des Fotovoltaik-Generators angeschlossen. Eine niederohmige Spannungsquelle zur Potentialanhebung ist in Reihe zu den Fotovoltaik-Modulen des Fotovoltaik-Generators mit dem Leiter verbunden, an den das Isolationsüberwachungsgerät angekoppelt ist.

Die unsymmetrische Ankopplung des Isolationsüberwachungsgerätes bewirkt, dass der Innenwiderstand des Isolationsüberwachungsgerätes in Verbindung mit der in Reihe geschalteten Spannungsquelle zu einer Potentialanhebung des Fotovoltaik-Moduls gegen Erde führt. Eine kontinuierliche Isolationsüberwachung ist ohne Einschränkung möglich Ein besonderer Vorteil dieser Lösung besteht darin, dass die PID-hemmende Wirkung auch nachts, wenn die Fotovoltaik-Module selbst weitgehend spannungsfrei sind, eintritt - sofern die in Reihe geschaltete Spannungsquelle und das Isolationsüberwachungsgerät aktiv sind.

Eine dritte Lösung ergibt sich in Verbindung mit dem Oberbegriff des Anspruchs 5 dadurch, dass das Isolationsüberwachungsgerät unsymmetrisch zwischen einem Pluspol oder einem Minuspol des Fotovoltaik-Generators und Erde angekoppelt ist und eine niederohmige Spannungsquelle seriell zu dem Isolationsüberwachungsgerät gegen Erde geschaltet ist.

Auch bei dieser Lösung ist das Isolationsüberwachungsgerät unsymmetrisch, d.h. entweder an den Plus- oder an den Minusleiter des Fotovoltaik-Generators angeschlossen.

Bei einem von dem Isolationsüberwachungsgerät gemessenen Isolationswiderstand des Fotovoltaik-Generators, welcher über dem Wert des Innenwiderstandes des Isolationsüberwachungsgerätes liegt, entsteht eine PID-hemmende Wirkung. Eine kontinuierliche Isolationsüberwachung ist auch hier ohne Einschränkung möglich.

In weiterer Ausgestaltung ist die niederohmige Spannungsquelle als Offset-Spannungsquelle zur Messspannung des Isolationsüberwachungsgerätes in das Isolationsüberwachungsgerät integriert.

Alternativ zu einer Ausführung der Spannungsquelle als separates Modul kann die in Reihe geschaltete Spannungsquelle in Form eines Spannungs-Offsets zur Messspannung in einem Isolationsüberwachungsgerät integriert·sein.

Eine vierte Lösung ergibt sich in Verbindung mit dem Oberbegriff des Anspruchs 7 dadurch, dass die Isolationsüberwachungseinrichtung symmetrisch zwischen einen Pluspol des Fotovoltaik-Generators und Erde und zwischen einen Minuspol des Fotovoltaik-Generators und Erde geschaltet ist, und dass die Schaltungsanordnung eine Isolationsfehlersucheinrichtung mit einer Prüfstromquelle und eine Steuerungseinrichtung aufweist, wobei die Isolationsfehlersucheinrichtung symmetrisch zwischen den Pluspol des Fotovoltaik-Generators und Erde und zwischen den Minuspol des Fotovoltaik-Generators und Erde geschaltet ist und die Steuerungseinrichtung den Funktionsablauf der Isolationsüberwachungseinrichtung und der Isolationsfehlersucheinrichtung so steuert, dass eine zeitlich kontinuierliche oder eine nahezu zeitlich kontinuierliche Isolationsüberwachung erfolgt und dass eine Reduzierung der potenzialinduzierten Degradation durch eine Regelung eines Prüfstroms der Prüfstromquelle stattfindet.

Bei dieser Lösung ist sowohl die Isolationsüberwachungseinrichtung als auch die Isolationsfehlersucheinrichtung symmetrisch gegen Erde, d.h. sowohl an den Pluspol als auch an den Minuspol des Fotovoltaik-Generators geschaltet.

Die vierte Lösung basiert zum einen darauf, dass der von der Prüfstromquelle der Isolationsüberwachungseinrichtung erzeugte Prüfstrom genutzt und so geregelt wird, dass eine PID-hemmende Potentialanhebung des Fotovoltaik-Moduls gegen Erde eintritt.

Zum anderen wird das Zusammenwirken der Funktionen Isolationsüberwachung und Isolationsfehlersuche so gesteuert, dass sowohl eine zeitlich kontinuierliche oder eine nahezu zeitlich kontinuierliche Isolationsüberwachung wie auch eine PID-hemmende Wirkung erzielt werden.

Im Fall der nahezu zeitlich kontinuierlichen Isolationsüberwachung wird der Funktionsablauf von Isolationsüberwachung und Prüfstromeinspeisung derart gesteuert, dass bei Aktivität einer der beiden Funktionen (Isolationsüberwachung oder Isolationsfehlersuche) die jeweils andere Funktion deaktiviert wird. Jedoch muss die Aktivität der Isolationsüberwachung ausreichend lang und häufig genug sein, um in der praktischen Anwendung eine zuverlässige Überwachung des Isolationswiderstands zu gewährleisten. Die Messdauer der Isolationsüberwachung ist dabei unter anderem abhängig von der Größe der Netzableitkapazitäten und weiteren im Netz vorhandenen Störkomponenten. Praktikabel könnte beispielsweise ein Wert von 5 min Isolationsüberwachungs-Aktivität pro Stunde sein.

Weiterhin ist die Prüfstromquelle der Isolationsfehlersucheinrichtung so hochohmig ausgeführt, dass der Prüfstrom der Prüfstromquelle als Messstrom zur Isolationsüberwachung dient. In dieser Ausgestaltung kann die Prüfstromquelle als ideale Stromquelle betrachtet werden und es ist eine zeitlich kontinuierliche Isolationsüberwachung, d.h. eine Isolationsüberwachung ohne Unterbrechungen, möglich, wobei der Prüfstrom neben der Aufgabe einer Potentialanhebung auch die Funktion des Messstroms zur Isolationsüberwachung erfüllt.

Vorzugsweise sind die Isolationsüberwachungseinrichtung, die Isolationsfehlersucheinrichtung und die Steuerungseinrichtung integriert in einem Kombigerät angeordnet.

Dies ermöglicht eine schaltungstechnisch effiziente Implementierung der geforderten Funktionalitäten.

Eine fünfte Lösung ergibt sich in Verbindung mit dem Oberbegriff des Anspruchs 10 dadurch, dass das Isolationsüberwachungsgerät symmetrisch zwischen einem Pluspol des Fotovoltaik-Generators und Erde und zwischen einem Minuspol des Fotovoltaik-Generators und Erde geschaltet ist und dass der Fotovoltaik-Generator eine Schirmung aufweist, die mittels einer hochohmigen Spannungsquelle auf ein positives Potenzial gelegt ist.

Die Überwachung des Isolationswiderstands wird durch ein symmetrisch gegen Erde, d.h. sowohl an den Pluspol als auch an den Minuspol des Fotovoltaik-Generators geschaltetes Isolationsüberwachungsgerät übernommen.

Die aus einer leitfähigen Schirmfolie bestehende Schirmung ist gegenüber dem Fotovoltaik-Modul und gegenüber dem geerdeten Modulrahmen entsprechend den normativen Anforderungen zum Schutz gegen elektrischen Schlag doppelt isoliert aufgebaut. Da die Hemmung der Zelldegradation auf dem Aufbau eines elektrostatischen Feld gegen Erde basiert, ist es nicht erforderlich, die Schirmfolie über eine niederohmige Spannungsquelle auf ein hohes positives Potenzial gegen Erde zu legen. Stattdessen erfolgt die elektrische Verbindung von der Spannungsquelle zu der Schirmung über eine hochohmige, sicher strombegrenzende Schutzimpedanz. Diese Maßnahme ermöglicht zudem einen zusätzlichen Schutz gegen elektrischen Schlag.

Eine kontinuierliche Isolationsüberwachung ist hier ohne Einschränkung möglich, da keine galvanische Verbindung zwischen dem Fotovoltaik-Generator und der isolierten Schirmungsfolie existiert.

Weitere vorteilhafte Ausgestaltungsmerkmale ergeben sich aus der nachfolgenden Beschreibung und den Zeichnungen, die eine bevorzugte Ausführungsform der Erfindung an Hand von Beispielen erläutern. Es zeigen:
- **Fig. 1:**: eine Fotovoltaik-Anlage mit einer erfindungsgemäßen Schaltungsanordnung gemäß erster Lösung,
- **Fig. 2:**: eine Fotovoltaik-Anlage mit einer erfindungsgemäßen Schaltungsanordnung gemäß zweiter Lösung,
- **Fig. 3:**: eine Fotovoltaik-Anlage mit einer erfindungsgemäßen Schaltungsanordnung gemäß dritter Lösung,
- **Fig. 4:**: eine Fotovoltaik-Anlage mit einer erfindungsgemäßen Schaltungsanordnung gemäß vierter Lösung und
- **Fig. 5:**: eine erfindungsgemäße Fotovoltaik-Anlage mit einem Fotovoltaik-Generator und einer Schaltungsanordnung gemäß fünfter Lösung.

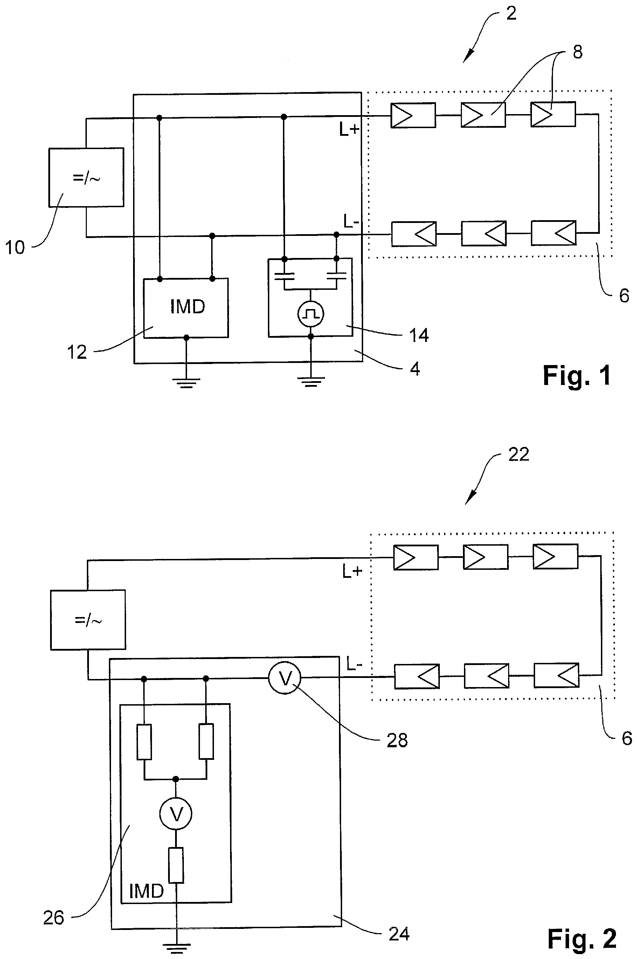

**Fig. 1** zeigt eine Fotovoltaik-Anlage 2 mit einer erfindungsgemäßen Schaltungsanordnung 4 gemäß erster Lösung. Die Fotovoltaik-Anlage 2 umfasst einen aus Fotovoltaik-Modulen 8 aufgebauten Fotovoltaik-Generator 6, einen Wechselrichter 10 und die Schaltungsanordnung 4 zur Reduzierung der potenzialinduzierten Degradation bei den Fotovoltaik-Modulen 8.

Die Schaltungsanordnung 4 besteht aus einem Isolationsüberwachungsgerät 12 und einer Impuls-Einkopplungsschaltung 14. Der Erdanschluss des Isolationsüberwachungsgerätes 12 und der Erdanschluss der Impuls-Einkopplungsschaltung 14 liegen auf Erdpotenzial und die jeweiligen Netzanschlüsse des Isolationsüberwachungsgerätes 12 und der Impuls-Einkopplungsschaltung 14 sind symmetrisch mit dem Pluspol L+ und dem Minuspol L- des Fotovoltaik-Generators 6 verbunden.

In **Fig. 2** ist eine Fotovoltaik-Anlage 22 mit einer erfindungsgemäßen Schaltungsanordnung 24 gemäß zweiter Lösung dargestellt.

Die Schaltungsanordnung 24 besteht aus einem Isolationsüberwachungsgerät 26 und einer niederohmigen Spannungsquelle 28. Das Isolationsüberwachungsgerät 26 ist unsymmetrisch an den Fotovoltaik-Generator 6 angekoppelt, also nur mit dem Minuspol L- des Fotovoltaik-Generators 6 verbunden, und die Spannungsquelle 28 ist seriell in den Leiter des Minuspols L- geschaltet.

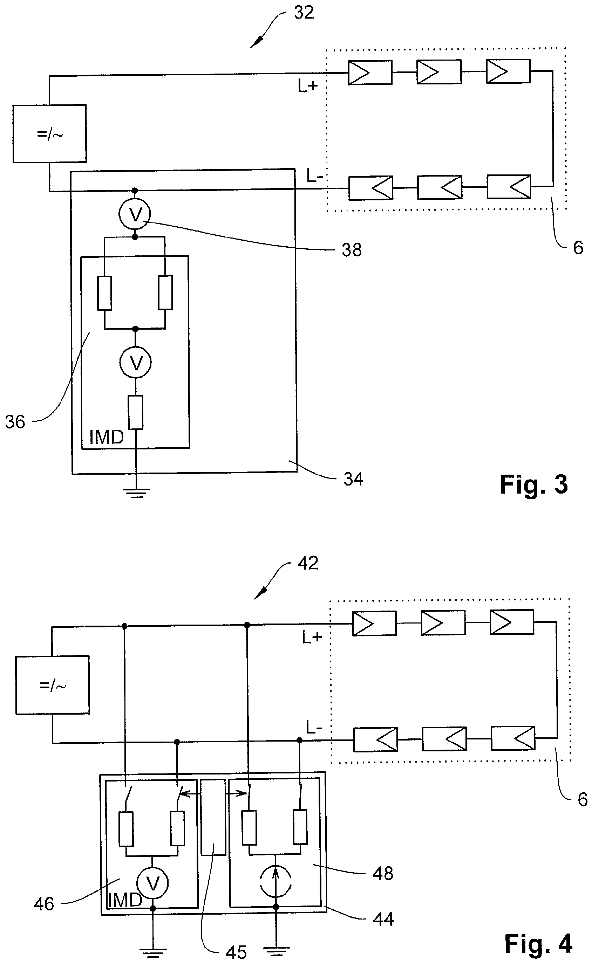

**Fig. 3** zeigt eine Fotovoltaik-Anlage 32 mit einer erfindungsgemäßen Schaltungsanordnung 34 gemäß dritter Lösung.

Die Schaltungsanordnung 34 besteht aus einem Isolationsüberwachungsgerät 36 und einer seriell zu dem Isolationsüberwachungsgerät 36 geschalteten niederohmigen Spannungsquelle 38. Die Schaltungsanordnung 34 ist unsymmetrisch mit dem Minuspol L- des Fotovoltaik-Generators 6 verbunden.

**Fig. 4** zeigt eine Fotovoltaik-Anlage 42 mit einer erfindungsgemäßen Schaltungsanordnung 44 gemäß vierter Lösung.

Die Schaltungsanordnung 44 besteht aus einer Isolationsüberwachungseinrichtung 46, einer Isolationsfehlersucheinrichtung 48 mit einer Prüfstromquelle und einer Steuerungseinrichtung 45, wobei diese Funktionalitäten in einem Kombigerät integriert sind. Die Isolationsüberwachungseinrichtung 46 und die Isolationsfehlersucheinrichtung 48 sind jeweils symmetrisch, d.h. sowohl an den Plusleiter L+ als auch an den Minusleiter L- des Fotovoltaik-Generators 6, angeschlossen.

Die Steuerungseinrichtung 45 regelt die Prüfstromquelle der Isolationsfehlersucheinrichtung 48 derart, dass durch eine Potentialanhebung des Fotovoltaik-Moduls gegen Erde die PID-hemmende Wirkung eintritt. In dem dargestellten Beispiel der Trennung von Messstrom zur Isolationsüberwachung und Prüfstrom steuert die Steuerungseinrichtung 45 den Funktionsablauf durch wechselseitiges Aktivieren der Isolationsüberwachungseinrichtung 46 und der Isolationsfehlersucheinrichtung 48 so, dass eine nahezu zeitlich kontinuierliche Isolationsüberwachung und eine Reduzierung der potenzialinduzierten Degradation stattfinden.

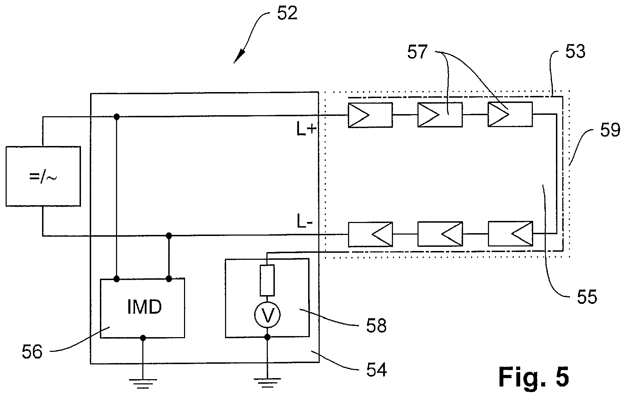

**Fig. 5** zeigt eine erfindungsgemäße Fotovoltaik-Anlage 52 mit einem Fotovoltaik-Generator 55 und einer Schaltungsanordnung 54 gemäß fünfter Lösung.

Der Fotovoltaik-Generator 55 ist mit einer Schirmung 53 versehen, die als leitfähige Schirmfolie ausgeführt ist und die eine Wanderung von Ladungsträgern zwischen den Fotovoltaik-Modulen 57 und dem geerdeten Modulrahmen 59 unterbindet.

Die Schaltungsanordnung 54 umfasst ein symmetrisch an den Pluspol L+ und den Minuspol L- des Fotovoltaik-Generators 55 angekoppeltes Isolationsüberwachungsgerät 56 und eine hochohmige Spannungsquelle 58, die die Schirmung 53 des Fotovoltaik-Generators 55 auf ein hohes positives Potenzial gegen Erde legt.

## Patentansprüche

1. Schaltungsanordnung (4) zur Reduzierung der potenzialinduzierten Degradation bei Fotovoltaik-Modulen (8) eines Fotovoltaik-Generators (6), mit einem Isolationsüberwachungsgerät (12) zur zeitlich kontinuierlichen Isolationsüberwachung des Fotovoltaik-Generators (6),
**dadurch gekennzeichnet,**
**dass** das Isolationsüberwachungsgerät (12) symmetrisch zwischen einen Pluspol (L+) des Fotovoltaik-Generators (6) und Erde und zwischen einen Minuspol (L-) des Fotovoltaik-Generators (6) und Erde geschaltet ist und dass die Schaltungsanordnung (4) eine Impuls-Einkopplungsschaltung (14) aufweist, die zur Einkopplung positiver Spannungsimpulse symmetrisch zwischen den Pluspol (L+) des Fotovoltaik-Generators (6) und Erde und zwischen den Minuspol (L-) des Fotovoltaik-Generators (6) und Erde geschaltet ist.

2. Schaltungsanordnung nach Anspruch 1,
**dadurch gekennzeichnet,**
**dass** die Impuls-Einkopplungsschaltung (14) als kapazitive Einkopplungsschaltung ausgeführt ist.

3. Schaltungsanordnung nach Anspruch 1 oder 2,
**dadurch gekennzeichnet,**
**dass** die Impuls-Einkopplungsschaltung (14) in das Isolationsüberwachungsgerät (12) integriert ist.

4. Schaltungsanordnung (24) zur Reduzierung der potenzialinduzierten Degradation bei Fotovoltaik-Modulen (8) eines Fotovoltaik-Generators (6), mit einem Isolationsüberwachungsgerät (26) zur zeitlich kontinuierlichen Isolationsüberwachung des Fotovoltaik-Generators (6),
**dadurch gekennzeichnet,**
**dass** das Isolationsüberwachungsgerät (26), welches eine Spannungsquelle mit einer Messspannung aufweist, und unsymmetrisch zwischen
einen Pluspol (L+) oder einen Minuspol (L-) des Fotovoltaik-Generators (6) und Erde angekoppelt ist und dass eine niederohmige Spannungsquelle (28) seriell zu der Ankopplung des Isolationsüberwachungsgerätes (26) und seriell zu den Fotovoltaik-Modulen (8) des Fotovoltaik-Generators (6) geschaltet ist.

5. Schaltungsanordnung (34) zur Reduzierung der potenzialinduzierten Degradation bei Fotovoltaik-Modulen (8) eines Fotovoltaik-Generators (6), mit einem Isolationsüberwachungsgerät (36) zur zeitlich kontinuierlichen Isolationsüberwachung des Fotovoltaik-Generators (6),
**dadurch gekennzeichnet,**
**dass** das Isolationsüberwachungsgerät (36), welches eine Spannungsquelle mit einer Messspannung aufweist, und unsymmetrisch zwischen
einem Pluspol (L+) oder einem Minuspol (L-) des Fotovoltaik-Generators (6) und Erde angekoppelt ist und eine niederohmige Spannungsquelle (38) seriell zu dem Isolationsüberwachungsgerät (36) gegen Erde geschaltet ist.

6. Schaltungsanordnung nach Anspruch 5,
**dadurch gekennzeichnet,**
**dass** die niederohmige Spannungsquelle (38) als Offset-Spannungsquelle zur Messspannung des Isolationsüberwachungsgerätes (36) in das Isolationsüberwachungsgerät (36) integriert ist.

7. Schaltungsanordnung (44) zur Reduzierung der potenzialinduzierten Degradation bei Fotovoltaik-Modulen (8) eines Fotovoltaik-Generators (6), mit einer Isolationsüberwachungseinrichtung (46) zur zeitlich kontinuierlichen Isolationsüberwachung des Fotovoltaik-Generators (6),
**dadurch gekennzeichnet,**
**dass** die Isolationsüberwachungseinrichtung (46) symmetrisch zwischen einen Pluspol (L+) des Fotovoltaik-Generators (6) und Erde und zwischen einen Minuspol (L-) des Fotovoltaik-Generators (6) und Erde geschaltet ist, und dass die Schaltungsanordnung (44) eine Isolationsfehlersucheinrichtung (48) mit einer Prüfstromquelle und eine Steuerungseinrichtung (45) aufweist, wobei die Isolationsfehlersucheinrichtung (48) symmetrisch zwischen den Pluspol (L+) des Fotovoltaik-Generators (6) und Erde und zwischen den Minuspol (L-) des Fotovoltaik-Generators (6) und Erde geschaltet ist und die Steuerungseinrichtung (45) den Funktionsablauf der Isolationsüberwachungseinrichtung (46) und der Isolationsfehlersucheinrichtung (48) so steuert, dass eine zeitlich kontinuierliche oder eine nahezu zeitlich kontinuierliche Isolationsüberwachung erfolgt und dass eine Reduzierung der potenzialinduzierten Degradation durch eine Regelung eines Prüfstroms der Prüfstromquelle stattfindet.

8. Schaltungsanordnung nach Anspruch 7,
**dadurch gekennzeichnet,**
**dass** die Prüfstromquelle der Isolationsfehlersucheinrichtung (48) so hochohmig ausgeführt ist, dass der Prüfstrom der Prüfstromquelle als Messstrom zur Isolationsüberwachung dient.

9. Schaltungsanordnung nach Anspruch 7 oder 8,
**dadurch gekennzeichnet,**
**dass** die Isolationsüberwachungseinrichtung (46), die Isolationsfehlersucheinrichtung (48) und die Steuerungseinrichtung (45) integriert in einem Kombigerät angeordnet sind.

10. Fotovoltaik-Anlage (52) mit einer Schaltungsanordnung (54) zur Reduzierung der potenzialinduzierten Degradation bei Fotovoltaik-Modulen (57), mit einem Fotovoltaik-Generator (55) und mit einem Isolationsüberwachungsgerät (56) zur zeitlich kontinuierlichen Isolationsüberwachung des Fotovoltaik-Generators (55),
**dadurch gekennzeichnet,**
**dass** das Isolationsüberwachungsgerät (56) symmetrisch zwischen einem Pluspol (L+) des Fotovoltaik-Generators (55) und Erde und zwischen einem Minuspol (L-) des Fotovoltaik-Generators (55) und Erde geschaltet ist und dass der Fotovoltaik-Generator (55) eine Schirmung (53) aufweist, die mittels einer hochohmigen Spannungsquelle (58) auf ein positives Potenzial gelegt ist.

## Claims

1. A circuit arrangement (4) for reducing potential-induced degradation in photovoltaic modules (8) of a photovoltaic generator (6), comprising an insulation monitoring device (12) for a temporally continuous insulation monitoring of the photovoltaic generator (6),
**characterized in that**
the insulation monitoring device (12) is connected symmetrically between a positive pole (L+) of the photovoltaic generator (6) and ground and between a negative pole (L-) of the photovoltaic generator (6) and ground and that the circuit arrangement (4) comprises an impulse coupling circuit (14), which is symmetrically connected between the positive pole (L+) of the photovoltaic generator (6) and ground and between the negative pole (L-) of the photovoltaic generator (6) and ground for coupling positive voltage impulses.

2. The circuit arrangement according to claim 1,
**characterized in that**
the impulse coupling circuit (14) is realized as a capacitive coupling circuit.

3. The circuit arrangement according to claim 1 or 2,
**characterized in that**
the impulse coupling circuit (14) is integrated into the insulation monitoring device (12).

4. A circuit arrangement (24) for reducing potential-induced degradation in photovoltaic modules (8) of a photovoltaic generator (6), comprising an insulation monitoring device (26) for a temporally continuous insulation monitoring of the photovoltaic generator (6),
**characterized in that**
the insulation monitoring device (26), which comprises a voltage source having a measuring voltage, is connected asymmetrically between either a positive pole (L+) or a negative pole (L-) of the photovoltaic generator (6) and ground and that a low-impedance voltage source (28) is connected serially to the coupling of the insulation monitoring device (26) and serially to the photovoltaic modules (8) of the photovoltaic generator (6).

5. A circuit arrangement (34) for reducing potential-induced degradation in photovoltaic modules (8) of a photovoltaic generator (6), comprising an insulation monitoring device (36) for a temporally continuous insulation monitoring of the photovoltaic generator (6),
**characterized in that**
the insulation monitoring device (36), which comprises a voltage source having a measuring voltage, is connected asymmetrically between either a positive pole (L+) or a negative pole (L-) of the photovoltaic generator (6) and ground and that a low-impedance voltage source (38) is connected serially to the insulation monitoring device (36) to ground.

6. The circuit arrangement according to claim 5,
**characterized in that**
the low-impedance voltage source (38) is integrated into the insulation monitoring device (36) as an offset voltage source to the measurement voltage of the insulation monitoring device (36).

7. A circuit arrangement (44) for reducing potential-induced degradation in photovoltaic modules (8) of a photovoltaic generator (6), comprising an insulation monitoring device (46) for a temporally continuous insulation monitoring of the photovoltaic generator (6),
**characterized in that**
the insulation monitoring device (46) is connected symmetrically between a positive pole (L+) of the photovoltaic generator (6) and ground and between a negative pole (L-) of the photovoltaic generator (6) and ground and that the circuit arrangement (44) comprises an insulation fault location device (48) having a test current source and a control device (45), said insulation fault location device (48) being connected symmetrically between the positive pole (L+) of the photovoltaic generator (6) and ground and between the negative pole (L-) of the photovoltaic generator (6) and ground and said control device (45) controls the functional sequence of the insulation monitoring device (46) and the insulation fault location device (48) such that a temporally continuous or a nearly temporally continuous insulation monitoring is carried out and that the potential-induced degradation is reduced by controlling a test current of the test current source.

8. The circuit arrangement according to claim 7,
**characterized in that**
the test current source of the insulation fault location device (48) is configured with such a high impedance that the test current of the test current source serves as a measurement current for insulation monitoring.

9. The circuit arrangement according to claim 7 or 8,
**characterized in that**
the insulation monitoring device (46), the insulation fault location device (48) and the control device (45) are arranged so as to be integrated in a combined device.

10. A photovoltaic system (52) comprising a circuit arrangement (54) for reducing potential-induced degradation in photovoltaic modules (57), comprising a photovoltaic generator (55) and comprising an insulation monitoring device (56) for a temporally continuous insulation monitoring of the photovoltaic generator (55),
**characterized in that**
the insulation monitoring device (56) is connected symmetrically between a positive pole (L+) of the photovoltaic generator (55) and ground and between a negative pole (L-) of the photovoltaic generator (55) and ground and that the photovoltaic generator (55) comprises a shielding (53), which is laid on a positive potential by means of a high-impedance voltage source (58).

## Revendications

1. Agencement de circuit (4) pour la réduction d'une dégradation induite par potentiel dans des modules photovoltaïques (8) d'un générateur photovoltaïque (6), comprenant un dispositif de surveillance d'isolement (12) pour une surveillance d'isolement temporellement continue du générateur photovoltaïque (6),
**caractérisé en ce que**
le dispositif de surveillance d'isolement (12) est relié symétriquement entre une borne positive (L+) du générateur photovoltaïque (6) et la terre et entre une borne négative (L-) du générateur photovoltaïque (6) et la terre et **en ce que** l'agencement de circuit (4) comprend un circuit de couplage d'impulsion (14) qui est relié symétriquement entre la borne positive (L+) du générateur photovoltaïque (6) et la terre et entre la borne négative (L-) du générateur photovoltaïque (6) et la terre pour le couplage des impulsions de tension positives.

2. Agencement de circuit selon la revendication 1,
**caractérisé en ce que**
le circuit de couplage d'impulsion (14) est réalisé en tant que circuit de couplage capacitif.

3. Agencement de circuit selon la revendication 1 ou 2,
**caractérisé en ce que**
le circuit de couplage d'impulsion (14) est intégré dans la dispositif de surveillance d'isolement (12).

4. Agencement de circuit (24) pour la réduction d'une dégradation induite par potentiel dans des modules photovoltaïques (8) d'un générateur photovoltaïque (6), comprenant un dispositif de surveillance d'isolement (26) pour une surveillance d'isolement temporellement continue du générateur photovoltaïque (6),
**caractérisé en ce que**
le dispositif de surveillance d'isolement (26), qui comprend une source de tension ayant une tension mesurée, est relié asymétriquement entre une borne positive (L+) ou une borne négative (L-) du générateur photovoltaïque (6) et la terre et **en ce qu'**une source de tension (28) à basse impédance est reliée en série au couplage du dispositif de surveillance d'isolement (26) et en série aux modules photovoltaïques (8) du générateur photovoltaïque (6).

5. Agencement de circuit (34) pour la réduction d'une dégradation induite par potentiel dans des modules photovoltaïques (8) d'un générateur photovoltaïque (6), comprenant un dispositif de surveillance d'isolement (36) pour une surveillance d'isolement temporellement continue du générateur photovoltaïque (6),
**caractérisé en ce que**
le dispositif de surveillance d'isolement (36), qui comprend une source de tension ayant une tension mesurée, est relié asymétriquement entre une borne positive (L+) ou une borne négative (L-) du générateur photovoltaïque (6) et la terre et **en ce qu'**une source de tension (38) à basse impédance est reliée par série au dispositif de surveillance d'isolement (36) à la terre.

6. Agencement de circuit selon la revendication 5,
**caractérisé en ce que**
la source de tension (38) à basse impédance est intégrée dans le dispositif de surveillance d'isolement (36) en tant que source de tension d'offset pour la tension mesurée du dispositif de surveillance d'isolement (36).

7. Agencement de circuit (44) pour la réduction d'une dégradation induite par potentiel dans des modules photovoltaïques (8) d'un générateur photovoltaïque (6), comprenant un dispositif de surveillance d'isolement (46) pour une surveillance d'isolement temporellement continue du générateur photovoltaïque (6),
**caractérisé en ce que**
le dispositif de surveillance d'isolement (46) est relié symétriquement entre une borne positive (L+) du générateur photovoltaïque (6) et la terre et entre une borne négative (L-) du générateur photovoltaïque (6) et la terre et **en ce que** l'agencement de circuit (44) comprend un dispositif de location de défauts d'isolement (48) ayant une source de courant d'essai et un dispositif de contrôle (45), ledit dispositif de location de défauts d'isolement (48) étant relié symétriquement entre la borne positive (L+) du générateur photovoltaïque (6) et la terre et entre la borne négative (L-) du générateur photovoltaïque (6) et la terre et ledit dispositif de contrôle (45) contrôlant la séquence fonctionnelle du dispositif de surveillance d'isolement (46) et du dispositif de location de défauts d'isolement (48) de telle manière qu'une surveillance d'isolement temporellement continue ou presque temporellement continue est effectuée et que la dégradation induite par potentiel est déduite en contrôlant un courant d'essai de la source de courant d'essai.

8. Agencement de circuit selon la revendication 7,
**caractérisé en ce que**
la source de courant d'essai du dispositif de location de défauts d'isolement (48) est effectué à une tellement haute impédance que le courant d'essai de la source de courant d'essai sert en tant que courant mesuré pour la surveillance d'isolement.

9. Agencement de circuit selon la revendication 7 ou 8,
**caractérisé en ce que**
le dispositif de surveillance d'isolement (46), le dispositif de location de défauts d'isolement (48) et le dispositif de contrôle (45) sont disposés dans un dispositif combiné de manière à être y intégrée.

10. Un système photovoltaïque (52) comprenant un agencement de circuit (54) pour la réduction d'une dégradation induite par potentiel dans des modules photovoltaïques (57), comprenant un générateur photovoltaïque (55) et comprenant un dispositif de surveillance d'isolement (56) pour une surveillance d'isolement temporellement continue du générateur photovoltaïque (55),
**caractérisé en ce que**
le dispositif de surveillance d'isolement (56) est relié symétriquement entre une borne positive (L+) du générateur photovoltaïque (55) et la terre et entre une borne négative (L-) du générateur photovoltaïque (55) et la terre et **en ce que** le générateur photovoltaïque (55) comprend un blindage (53) qui est mis sur un potentiel positif au moyen d'une source de tension (58) à haute impédance.
